(19) Europäisches Patentamt
European Patent Office
Office européen des brevets

(11) **EP 2 873 023 B1**

(12) **EUROPEAN PATENT SPECIFICATION**

(45) Date of publication and mention
of the grant of the patent:
**26.02.2020 Bulletin 2020/09**

(51) Int Cl.:
**G06F 21/56** *(2013.01)*   **G06F 21/62** *(2013.01)*
**G06F 21/51** *(2013.01)*

(21) Application number: **12809266.5**

(22) Date of filing: **19.12.2012**

(86) International application number:
**PCT/EP2012/076161**

(87) International publication number:
**WO 2014/008961 (16.01.2014 Gazette 2014/03)**

(54) **TECHNIQUE FOR DETERMINING A MALIGN OR NON-MALIGN BEHAVIOR OF AN EXECUTABLE FILE**

VERFAHREN ZUR BESTIMMUNG EINES BÖSARTIGEN ODER HARMLOSEN VERHALTENS EINES AUSFÜHRBAREN DATEI

TECHNIQUE DE DÉTERMINATION DE COMPORTEMENT NÉFASTE OU INOFFENSIF D'UN FICHIER EXÉCUTABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.07.2012 US 201261670000 P**

(43) Date of publication of application:
**20.05.2015 Bulletin 2015/21**

(73) Proprietor: **Telefonaktiebolaget LM Ericsson (publ)**
**164 83 Stockholm (SE)**

(72) Inventors:
• **LANTZ, Patrik**
  **S-214 23 Malmö (SE)**
• **JOHANSSON, Björn**
  **S-237 36 Bjärred (SE)**
• **SMEETS, Bernard**
  **S-247 51 Dalby (SE)**

(74) Representative: **Brann AB**
**P.O. Box 3690**
**Drottninggatan 27**
**103 59 Stockholm (SE)**

(56) References cited:
**US-A1- 2007 140 479    US-A1- 2009 089 878**
**US-A1- 2011 145 920**

## Description

### Technical Field

The present disclosure generally relates to determining a malign or non-malign behavior of an executable file.

### Background

Since the appearance of the iPhone™ smartphone the word "app" has become synonym for applications that users of smartphone can use for various tasks. Although applications can be pre-stored on a smartphone (or similar device), the most common case is that a user downloads his/her application and installs it on his/her device. This is, for example, true for iPhone™, Android™, or Windows™ Phone devices. For instance, iPhone™ users download their applications from Apple™'s App Store, and Android™ phone users from Google™ Play although the latter users also can load their applications from other sources.

A problem with the possibility to download and install programs is the threat that the programs may be malware, that is they contain functionality that is designed to exhibit malign functions (e.g. theft of user information, corrupt user data, or code that modifies the working of other applications or even system functions) or it functions in a way that is not conforming the owner of the device (e.g. a phone used by a corporate user).

Apple™ has partially addressed this issue by introducing mandatory digital signing of applications through its application distribution point App™ Store and by screening applications before releasing them on App™ Store. For Android™ phones Google™ operates Google™ Play as a common distribution point and recently started an automated screening of applications before being made available via Google™ Play. Also Android™ applications are digitally signed.

When detecting anomalies of application or system execution, it is often desired to have or collect information about a host device. Scenarios where this is crucial involve targeted attacks where malware triggers its malicious functionality when located in a specific world-region or using a specific connectivity provider, but also for debugging purpose of crashed executables.

For the sake of simplicity in this disclosure, the term "malware" denotes all types of programs they either contain or entirely consist of functionality aiming a task that when performed successfully causes harm to the owner of the device where it operates or to the organization where the device is in operation. Well-known types of malware are virus and Trojan-horse programs but also programs like remote device managers can become malware when being installed and operated without proper authorization.

While the screening efforts of the applications by, for example, Apple™ and Google™, has a sanitizing effect on the employment of applications that a user can choose from at the official distribution points, there are still applications at the distribution points that are malware.

There are several reasons for this and most importantly one has to deal with:

- Human failures, e.g. when manually screening applications or writing the screening tool for automated screening;
- Screening covers only a set of known malign effects in the app code and thus new constructs may be undetected;
- Code obfuscation that could be used to protected applications from being exposed to software piracy can be used to hide malware functions that thus cannot be detected through code inspection;
- The malware code is devised to evade malware detection by behaving properly when being executed in a detection environment.

There exist reputation based systems for applications where people can express their opinion on an application and there are solutions where the people's approval can be secured through digital signatures. Such schemes can help to prevent a wide spread of bad applications but have the disadvantage that they are slow in detecting malware, susceptible to false opinion insertion, and that it is in practice to setup schemes that are reliable/secure. Today most distribution points have means where users can rate the app and leave any opinion in an unprotected way.

Prior art document (D1) US2011/145920 A1 is directed to a system and method for adverse mobile application identification. In US2011/145920 A1 it is stated that it would be desirable to use data and information gained about mobile communication device applications to help users make more educated decisions about the applications they choose to run on their mobile communication devices and to allow administrators and network operators to take preventative measures to further secure both individual devices and the network as a whole. It would further desirable to develop a way to anonymously collect data about mobile communication device behaviors and activities in order to promote the development of safer mobile applications. Document US2011/145920 A1 suggests a method comprising: on a server in communication with a plurality of mobile communication devices, the plurality connected to a mobile communication device network, monitoring behavioral data for a data object accessed by at least one of the plurality of mobile communication devices; obtaining and storing in a data store accessible by the server, the behavioral data for the data object; applying a model to at least some of the obtained behavioral data for the data object to determine whether or not the data object would have an adverse effect on at least one mobile communication device network to create disposition information; and, notifying a subscriber about disposition information that includes a determination that the data object would have adverse effects on the mobile communication device network. In an embodiment [0143], the server runs a data object in a virtual (e.g., simulated or emulated) or physical device and analyzes the behavior of the data object when run. In an embodiment, the virtual or physical device is instrumented so that it reports behavioral data for the data object. In an embodiment, the virtual or physical device's network traffic, calls, and SMS messages are analyzed by the server. For example, a virtual device may be configured to always report a specific location via its location APIs that are unlikely to occur in any real world circumstance. By analyzing the device's network traffic for various encodings of that location, such as a binary double encoding, base encoding, and text encoding, server is able to determine whether the data object attempts to report the device's location to a server. In an embodiment, the server examines the difference in state of the virtual or physical device before the data object is run on the device and after the data object has run. For example, a data object may exploit the kernel on a device upon which it is installed in order to install a stealth rootkit. In this case, a virtual device may show a substantial difference in certain sections of memory, such as in a system call dispatch table that should not change under ordinary circumstances. In an embodiment, the physical or virtual device has a custom root certificate authority in its list of trusted certificates and server intercepts all TLS traffic, using a server certificate that is signed by the custom certificate authority and proxies the traffic to its original destination. Because the device has a custom certificate authority, the data object is able to establish a valid TLS connection through server and all encrypted traffic is able to be analyzed by server. In an embodiment [0168], server and mobile communication device are configured to function together to prevent malware or spyware from adversely affecting mobile communication devices. It is stated that because mobile communication devices are limited in memory, processing ability, and battery capacity, it may be desirable for server to perform analysis, such as the analysis described herein, to determine if an application is considered to be malware or spyware rather than each device performing the analysis. In an embodiment [0171] the mobile communication device performs static analysis on the data object to extract application data to transmit to server. For example, on Android, the device may analyze the executable portion of an application packages, typically called "classes.dex". The device may extract a list of inter-process communication calls directly or indirectly performed by the executable file that utilize the "binder" mechanism and transmit information about the calls to server for use in analyzing the application package.

Document US 2007/140479 A1 may be construed to disclose a method and system for collecting data from devices using a homomorphic encryption of the data. A collection system of a device adds contributions to homomorphically encrypted data and forwards the requests to another device. When the device receives a reply to the request, it uncombines its contribution to the homomorphic encryption of the data. The device then forwards the reply to the previous device. The initiator device ultimately removes its contribution to the encryption and identifies the data.

Document US 2009/0089878 A1 describes detection of malicious behavior of a computer program using an emulation engine, an event detector and an event analyzer

**Summary**

Accordingly, there is a need for an implementation of a scheme that avoids one or more of the problems discussed above, or other related problems. The invention is defined by the appended claims.

In a first aspect, there is provided a method for determining a malign or non-malign behavior of an executable file; the method being performed in a file-execution device comprising a real environment, wherein the method comprises the steps of:

- receiving from a distribution point comprising an emulated environment:

    - a first behavior profile of the executable file, the first behavior profile comprising a first observable execution trace of the executable file from an emulated environment;
    - the executable file, and
    - a signature of the first behavior profile;

- installing, at the file-execution device, the executable file, under a prerequisite that the received signature of the first behavior profile is verified as correct;
- linking the first behavior profile to the executable file;
- generating in the file-execution device a second behavior profile of the executable file, the second behavior profile comprising a second observable execution trace of the executable file from a the real environment of the file execution device; and
- comparing the first and second observable execution traces so as to determine the malign or non-malign behavior of the executable file, where if the comparing step yields deviations between the first and second observable execution traces, the method further comprises:

- ceasing execution of the executable file,
- querying a user of the file-execution device whether the ceased execution is to be resumed, and
- updating the second behavior profile based on the result of the query.

According to a second aspect of the invention there is provided a wireless communication device for determining a malign or non-malign behavior of an executable file, the wireless communication device comprising at least one processor comprising a real environment configured to:

- acquiring a first behavior profile of the executable file, the first behavior profile
- comprising a first observable execution trace of the executable file from an emulated environment;
- receiving from a distribution point comprising the emulated environment, both the first behavior profile and the executable file;
- installing at the file-execution device, the executable file;
- linking the first profile to the executable file;
- generating in the file execution device a second behavior profile of the executable file, the second behavior profile comprising a second observable execution trace of the executable file from a real environment; and
- comparing the first and second observable execution traces so as to determine the malign or non-malign behavior of the executable file.

In optional refinements of the first aspect, there is or are provided at least one of the following:

- the method is performed in a file-execution device comprising the real environment, further comprising in the first acquiring receiving, from a distribution point comprising the emulated environment, both the first behavior profile and the executable file, wherein, in the second acquiring, second behavior profile is generated in the file-execution device;
- the receiving step further comprises receiving, along with the first behavior profile and the executable file, a signature of the first behavior profile;
- the signature is the result of application of a private key of a private/public key cryptosystem, and a public key used for verifying the signature is stored on the file-execution device or is received as a part of a digital certificate;
- the method further comprises separating the executable file from the signed first behavior profile;
- the method further comprises installing, at the file-execution device, the separated executable file under the prerequisite that the separated signature is verified as correct, and linking the separated first profile to the executable file;
- the method further comprises, if the comparing step yields deviations between the first and second observable execution traces ceasing execution of the executable file, querying the user whether the ceased execution is to be resumed, and updating the second first behavior profile based on the result of the query;
- the method further comprises, prior to generating the second behavior profile, simulating the result of the generating step;
- according to the method the first behavior profile is generated in the distribution point;
- the receiving step further comprises receiving by the distribution point the updated second behavior profile, and wherein the comparing step further comprises comparing in the distribution point, the first observable execution trace in the first behavior profile with a second observable execution trace in the second behavior profile, wherein the method further comprises updating or initially creating the first behavior profile based on the comparison;
- the first and second profiles are generated based on one of a treemap and a behavior graph.

In a further aspect, there is provided a method for anonymously collecting behavior data of an executable file, wherein the executable file is resident on each of two or more file-execution devices and distributed by a distribution point, and wherein the method is performed in an entity different from the distribution point and two or more file-execution devices, and comprises the steps of determining a trigger condition; first collecting, responsive to the trigger condition, a first behavior profile of the executable file from a first one of the two or more file-execution devices, the first behavior profile comprising a first observable execution trace of the executable file, and the first observable execution trace being non-mapped to the first file- execution device; and second collecting, responsive to the trigger condition, a second behavior profile of the executable file from a second one of the two or more file-execution devices, the second behavior profile comprising a second observable execution trace of the executable file, and the second observable execution trace being non-mapped to the second file-execution device.

Concerning the terminology used for the second to third, sixth and seventh aspects (as well as the other aspects insofar related to the first-named aspects), the following applies:

- The term "non-mapped" may in certain implementations be interpreted such that that the information is prevented from being mapped to, or associated with a specific user or device (e.g., in order to preserve privacy) by means of a scheme. As a non-limiting example, the scheme may comprise a (homomorphic) encryption.
- The term "executable file" may cover an app(lication) and/or a system update functionality.
- The term "behavior profile" may comprise a behavior of an executable file (in the sense of a behavioral observable trace) and/or device-specific information/settings (which may influence the behavior of the executable file as well).

In still further optional refinements, there is or are provided at least one of the following:

- the trigger condition is one of the executable file throwing a non-maskable interrupt, the two or more file-execution devices throwing a non-maskable interrupt, and the two or more file-execution devices passing a predetermined geographic location;
- the trigger condition is a comparison result determining a malign behavior of the executable file;
- the first and second collecting steps each comprise transmitting a request for anonymous collection of behavior data of the executable file to the first and second file-execution devices, and receiving the first and second observable execution traces from the first and second file-execution devices;
- the transmitting step further transmits the trigger condition, and the receiving step is a push operation from the first and second file-execution devices upon fulfillment of the trigger condition;
- the transmitting step is performed upon fulfillment of the trigger condition, and the receiving step is a pull operation initiated by the entity;
- the first and second observable execution traces being non-mapped to the first and second file-execution devices comprises the first and second observable execution traces being respectively homomorphically encrypted;
- the method further comprises buffering and obfuscating the received first and second homomorphically encrypted observable execution traces;
- the obfuscating step comprises one of adding, merging and mixing the first and second homomorphically encrypted observable execution traces;
- the method further comprises transmitting the buffered and obfuscated first and second homomorphically encrypted observable execution traces to a third party to be decrypted by a private key of a public/private key pair agreed between the file-execution devices and the third party, the homomorphic encryption having been performed by a public key of the public/private key pair;
- the entity is a Host Information Center, HIC;
- the HIC is comprised in a remote execution device;
- the remote execution device is a cloud.

In a third aspect, there is provided a method for anonymously collecting behavior data of an executable file distributed by a distribution point, wherein the method is performed in a file-execution device, the executable file is resident on the file-execution device, and comprises the steps of receiving, from an entity different from the distribution point and the file-execution device, a request for anonymous collection of behavior data of the executable file, and collecting, responsive to the received request, a behavior profile of the executable file, the behavior profile comprising an observable execution trace of the executable file, and the observable execution trace being non-mapped to the file-execution device.

In optional refinements of the third aspect, there is or are provided at least one of the following:

- the method further comprises homomorphically encrypting the collected observable execution trace so as to be non-mapped to the file-execution device;
- the encrypting step utilizes a public key of a public/private key pair agreed between the file-execution device and a third party;
- the method further comprises transmitting the collected observable execution trace to the entity;
- the receiving step further receives a trigger condition, and the transmitting step is a push operation from the file-execution device upon fulfillment of the trigger condition;
- the transmitting step is a pull operation initiated by the entity;
- the file-execution device is comprised in a trusted environment, and the executable file is a trusted application;
- the file-execution device performs the collecting step under supervision of a hypervizor entity.

In a fourth aspect, there is provided a computer program product comprising program code portions for performing a method according to any one of the first to third aspects, when the computer program product is executed on one or more computing devices.

In an optional refinement of the fourth aspect, the computer program product is stored on a computer readable recording medium.

In a fifth aspect, there is provided an apparatus for determining a malign or non-malign behavior of an executable file, the apparatus comprising at least one processor configured to receive from a distribution point comprising an emulated environment a first behavior profile of the executable file, the first behavior profile comprising a first observable execution trace of the executable file from an emulated environment, the executable file, and a signature of the first behavior profile. The processor is further configured to install at the file-execution device, the executable file, under a prerequisite that the received signature of the first profile is verified as correct; link the first behavior profile to the executable file; generate in the file-execution device a second behavior profile of the executable file, the second behavior profile comprising a second observable execution trace of the executable file from the real environment; and compare the first and second observable execution traces so as to determine the malign or non-malign behavior of the executable file. If the comparing step yields deviations between the first and second observable execution traces, the processor is further configured to: cease execution of the executable file, query the user whether the ceased execution is to be resumed, and update the second behavior profile based on the result of the query.

In a sixth aspect, there is provided an apparatus for anonymously collecting behavior data of an executable file, wherein the apparatus is constituted by an entity different from a distribution point and two or more file-execution devices, the executable file is resident on each of the two or more file-execution devices, and the apparatus comprises at least one processor configured to determine a trigger condition, collect, responsive to the trigger condition, a first behavior profile of the executable file from a first one of the two or more file-execution devices, the first behavior profile comprising a first observable execution trace of the executable file, and the first observable execution trace being non-mapped to the first file-execution device, and collect, responsive to the trigger condition, a second behavior profile of the executable file from a second one of the two or more file-execution devices, the second behavior profile comprising a second observable execution trace of the executable file, and the second observable execution trace being non-mapped to the second file-execution device.

In a seventh aspect, there is provided an apparatus for anonymously collecting behavior data of an executable file, wherein the apparatus is constituted by a file-execution device, the executable file is resident on the file-execution device, and the apparatus comprises at least one processor configured to receive, from an entity different from a distribution point and the file-execution device, a request for anonymous collection of behavior data of the executable file, and collect, responsive to the received request, a behavior profile of the executable file, the behavior profile comprising an observable execution trace of the executable file, and the observable execution trace being non-mapped to the file-execution device.

In an eighth aspect, there is provided a system, comprising the apparatus according to the fifth aspect being functionally split between a distribution point and a file-execution device, wherein the comparing operation is performed in at least one of the distribution point and the file-execution device, and a secure channel is established between the distribution point and the file-execution device.

In a ninth aspect, there is provided a data structure for storing observable execution traces of an executable file in a behavior profile, the data structure comprising at least one entry per system call performed by the executable file, the entry comprising an argument-to-function/method call and a timestamp of when the system call occurred.

In an optional refinement of the ninth aspect, there is or are provided at least one of the following:

- the system call comprised in the entry is hashed, excluding the timestamp;
- the argument is constituted by a classification of the argument; and/or
- the classification is a list of data elements comprising at least one of an origin of the argument, a security label, and least one argument range constraint.

## Brief Description of the Drawings

The embodiments of the technique presented herein are described herein below with reference to the accompanying drawings, in which:

Fig. 1 shows components comprised in a first exemplary device embodiment realized in the form of a distribution point, a file-executing device or another entity;

Fig. 2 shows a method embodiment which also reflects the interaction between the components of the device embodiment;

Fig. 3 shows a data structure embodiment;

Fig. 4A shows a first exemplary implementation of the embodiment in the form of a treemap;

Fig. 4B shows a second exemplary implementation of the embodiment in the form of a behavior graph; and

Fig. 5 shows components and method steps comprised in a second exemplary device and method embodiment realized in the form of a distribution point or a file-executing device.

**Detailed Description**

In the following description, for purposes of explanation and not limitation, specific details are set forth (such as particular signaling steps) in order to provide a thorough understanding of the technique presented herein. It will be apparent to one skilled in the art that the present technique may be practiced in other embodiments that depart from these specific details. For example, the embodiments will primarily be described in the context of so-called "apps" as an example for executable files; however, this does not rule out the use of the present technique in connection with other file systems or formats.

For the purpose of this disclosure, the terms "apparatus" and "system" have been introduced. Without being restricted thereto, the "system" may be implemented as a wireless communication network or a portion thereof. Moreover, the "apparatus" or the "wireless communication device" may be functionally split into a "distribution point" and a "file-execution device". In turn, the "distribution point" may be implemented as functionality in the Internet, for example in the IT/Telecommunications cloud. Moreover, the "file-execution device" may be fixed/wirebound or mobile, such as a fixed workstation, or a fixed or wireless desktop/ laptop, or a fixed or mobile Machine-to-Machine (M2M) interface, or a mobile terminal, such as a smartphone. However, those implementation examples are only illustrative; the person skilled in the art can readily devise various additional or supplemental implementations of the "system" and "wireless communication device".

Moreover, those skilled in the art will appreciate that the services, functions and steps explained herein may be implemented using software functioning in conjunction with a programmed microprocessor, or using an Application Specific Integrated Circuit (ASIC), a Digital Signal Processor (DSP) or general purpose computer. It will also be appreciated that while the following embodiments are described in the context of methods and devices, the technique presented herein may also be embodied in a computer program product as well as in a system comprising a computer processor and a memory coupled to the processor, wherein the memory is encoded with one or more programs that execute the services, functions and steps disclosed herein.

The present disclosure, without being restricted thereto, may be summarized in that the fact is used that the app is screened, preferably dynamically by executing it, and that there is a known trusted distribution point that could convey its findings of the screening in a more relevant way. Today the fact an app is made downloadable via a distribution point implies that the screening did not find anything harmful in the code having testing it. In the case of Android™, one also lists the permission (to other functions) the app requires. But this is basically all information that is available. According to the present disclosure, the user can of the device be actually instructed of the expected (and approved observed) behavior of the application. In the device, the app can be monitored when it executes and compare it with the behavior it showed during the screening. This allows to identify security relevant deviations from the approved behavior and to take countermeasures, e.g. blocking the app from further execution, notifying the user and or distribution point. Through digital signing the distribution point can convey the observed behavior in a secure (integrity protected) way. When identifying deviating behavior, device-specific information may be collected from the device in order to determine parameters that may have caused the abnormal behavior.

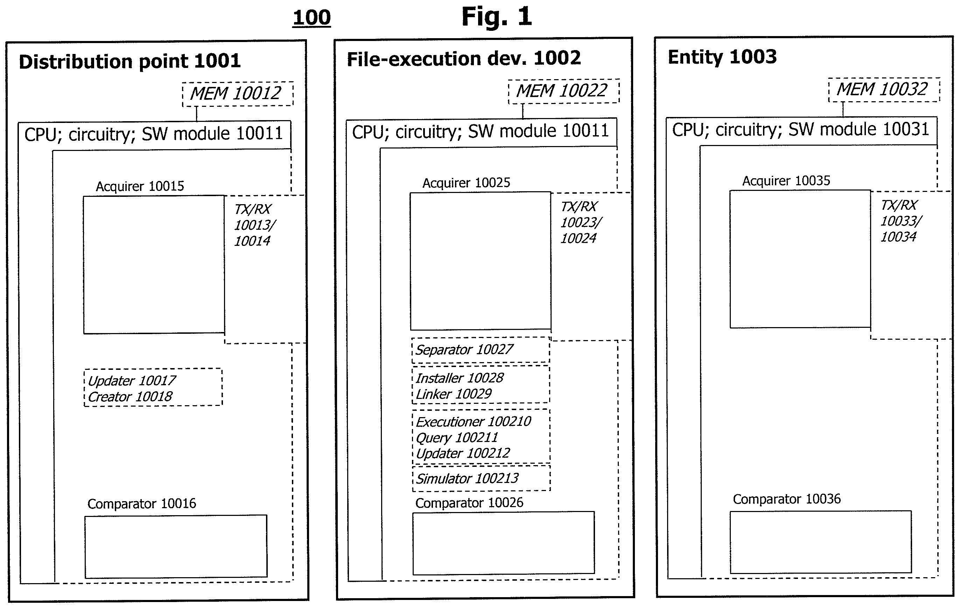

Fig. 1 shows components comprised in a first exemplary device embodiment realized in the form of a distribution point 1001, a file-executing device 1002 or another entity 1003. As shown in Fig. 1, the distribution point 1001 comprises a core functionality (e.g., one or more of a Central Processing Unit (CPU), dedicated circuitry and/or a software module) 10011, an optional memory (and/or database) 10012, an optional transmitter 10013 and an optional receiver 10014. Moreover, the distribution point 1001 comprises an acquirer 10015, a comparator 10016, an optional updater 10017 and an optional creator 10018.

Likewise, the file-executing device 1002 comprises a core functionality (e.g., one or more of a Central Processing Unit (CPU), dedicated circuitry and/or a software module) 10021, an optional memory (and/or database) 10022, an optional transmitter 10023 and an optional receiver 10024. Moreover, the device 1002 comprises an acquirer 10025, a comparator 10026, an optional separator 10027, an optional installer 10028, an optional linker 10029, an optional executioner 100210, an optional query 200211, an optional updater 100212 and an optional simulator 100213.

Finally, the (other) entity 1003 comprises a core functionality (e.g., one or more of a Central Processing Unit (CPU), dedicated circuitry and/or a software module) 10031, an optional memory (and/or database) 10032, an optional transmitter 10033 and an optional receiver 10034. Moreover, the entity 1003 comprises an acquirer 10035 and a comparator 10036.

In the following paragraphs, assume that x = 1, 2 or 3. As partly indicated by the dashed extensions of the functional block of the CPUs 100x1, the acquirer 10015, the comparator 10016, the updater 10017 and the creator 10018 (of the Distribution point 1001), the acquirer 10025, the comparator 10026, the separator 10027, the installer 10028, the linker 10029, the executioner 100210, the query 200211, the updater 100212 and the simulator 100213 (of the device 1002) and the acquirer 10035 and the comparator 10036 (of the entity 1003) as well as the memory 100x2, the transmitter 100x3 and the receiver 100x4 may at least partially be functionalities running on the CPUs 100x2, or may alternatively be separate functional entities or means controlled by the CPUs 100x1 and supplying the same with information. The transmitter and receiver components 100x3, 100x4 may be realized to comprise suitable interfaces and/or suitable signal generation and evaluation functions.

The CPUs 100x1 may be configured, for example, using software residing in the memories 100x2, to process various data inputs and to control the functions of the memories 100x2, the transmitter 100x3 and the receiver 100x3 (as well the acquirer 10015, the comparator 10016, the updater 10017 and the creator 10018 (of the Distribution point 1001), the acquirer 10025, the comparator 10026, the separator 10027, the installer 10028, the linker 10029, the executioner 100210, the query 200211, the updater 100212 and the simulator 100213 (of the device 1002) and the acquirer 10035 and the comparator 10036 (of the entity 1003)). The memory 100x2 may serve for storing program code for carrying out the methods according to the aspects disclosed herein, when executed by the CPUs 100x1.

It is to be noted that the transmitter 100x3 and the receiver 100x4 may be provided as an integral transceiver, as is indicated in Fig. 1. It is further to be noted that the transmitters/receivers 10013, 10014 may be implemented as physical transmitters/receivers for transceiving via an air interface or a wired connection, as routing/forwarding entities/interfaces between network elements, as functionalities for writing/reading information into/from a given memory area or as any suitable combination of the above. At least one of the above-described the acquirer 10015, the comparator 10016, the updater 10017 and the creator 10018 (of the Distribution point 1001), the acquirer 10025, the comparator 10026, the separator 10027, the installer 10028, the linker 10029, the executioner 100210, the query 200211, the updater 100212 and the simulator 100213 (of the device 1002) and the acquirer 10035 and the comparator 10036 (of the entity 1003), or the respective functionalities, may also be implemented as a chipset, module or subassembly.

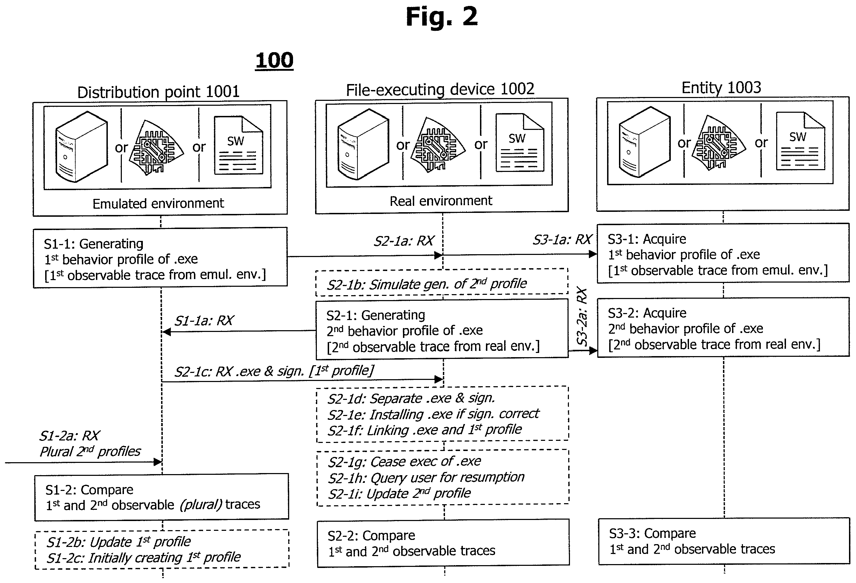

Fig. 2 illustrates an embodiment of a method for managing connection states of at least two subscriptions. In the signaling diagram of Fig. 2, time aspects between signaling are reflected in the vertical arrangement of the signaling sequence as well as in the sequence numbers. It is to be noted that the time aspects indicated in Fig. 2 do not necessarily restrict any one of the method steps shown to the step sequence outlined in Fig. 2. This applies in particular to method steps that are functionally disjunctive with each other.

The embodiment may be based on a secure channel between the mobile 1002 and a Trusted Service 1001 in the network. Part of the embodiment may reside in establishing a security context between the mobile 1002 and the trusted network service 1001. As a best mode, there is disclosed a setup where the trusted service 1001 (or the distribution point) signs the profile data with the secret key of a public-key cryptosystem. The public key that can be used for verifying the signature may be either already stored on the device 1002 or may be sent as part of a so-called (digital) certificate whose content can be verified by chain of certificates in a PKI (Public Key Infrastructure) scheme whose root certificate is stored on the device 1001.

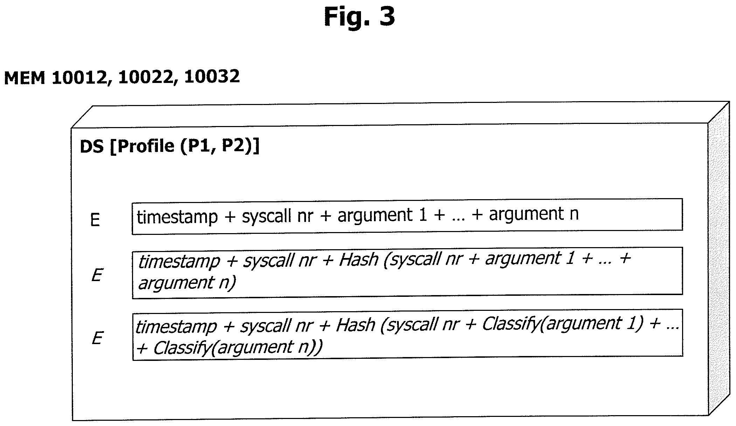

Fig. 3 shows a Data Structure (DS) embodiment, which may be stored in at least one of the memories 10012, 10022, 10032.

One way to analyze an app(lication) is to perform a static code analysis. Such an analysis can detect leaks of private information. However, static analysis is limited as it may not cover the dynamics of the application as it executes or it is rendered ineffective due to hiding and code obfuscation techniques.

The compilation of the app behavior profile P1, P2 is conducted by a behavior analysis in the distribution point before releasing it to the public. The app is executed in an emulated environment. During its execution, any interactions with the underlying operating system by the app are observed and stored in the profile P1, P2 using e.g. taint analysis. But other methods to capture the behavior are also possible, as long as they deliver a digitally observable execution trace of the behavior. The data of this profile P1 may be referred to as the Reference Application Behavior Profile (RABP).

This profile P1 may later be verified against a profile P2 generated by the same app on a real mobile device 1002. To augment the effectiveness of the profiles P1, P2 one can even watch the argument to function/method calls, e.g.

$$\text{Call\_profile\_entry E} = \text{timestamp} + \text{syscall nr} + \text{argument 1} + ... + \text{argument n}$$

or

$$\text{Call\_profile\_entry } E = \text{hash (timestamp + syscall nr + argument 1 +... + argument n)}$$

for each system call that the app generates. Instead of the argument itself, it would also be possible to first perform a classification of the argument and then optionally include the classification of the argument in the hash computation. Such a classification could be a list of data elements like, e.g., argument origin, security label, or argument range constraints.

$$\text{Call\_profile\_entry } E = \text{timestamp + syscall nr + } \backslash$$
$$\text{Classify(argument 1) +... + Classify(argument n))}$$

or

$$\text{Call\_profile\_entry } E = \text{hash (timestamp + syscall nr + } \backslash$$
$$\text{Classify(argument 1) +... + Classify(argument n)))}$$

The classification may render the call-profile-entries more suitable in capturing generic arguments rather than specific values.

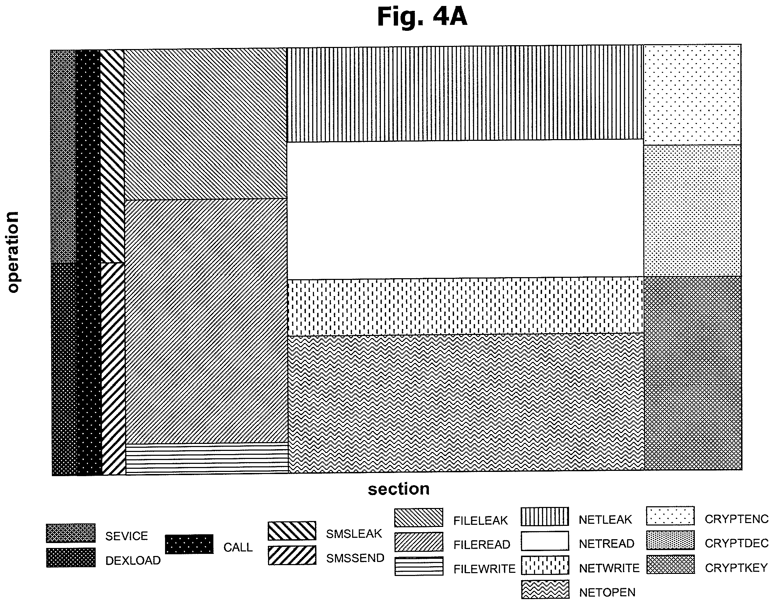

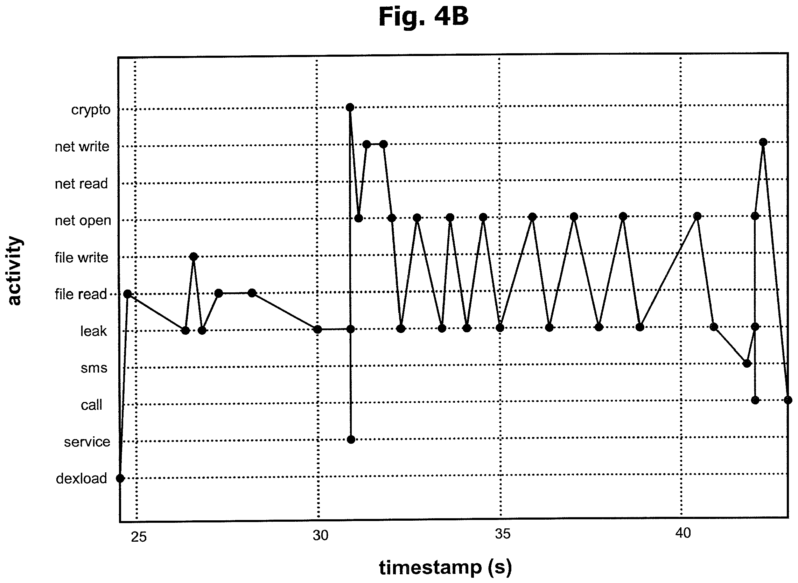

Fig. 4A shows a first exemplary implementation of the embodiment in the form of a treemap, and Fig. 4B shows a second exemplary implementation of the embodiment in the form of a behavior graph.

The app behavior profile itself may be composed of information collected during a behavioral analysis of the app during runtime. To this end, different technologies can be used as example embodiments we mention here treemaps in Fig. 4A and behavior graphs shown in Fig. 4B.

One further feature of these tree maps and behavior graphs resides in rendering the same e.g. multi-dimensional, so they can capture the behavior in a richer way.

Returning to Figs. 1 and 2, when a user downloads an app from the distribution point 1001, the file that contains the app code could be equipped with the signed RABP P1. Alternatively, the user could download such behavior profile from another place, e.g. a trusted service 1001 that makes behavior profiles P1 of applications. For simplicity, it can be assumed that the behavior profile P1 is bundled with the app code itself.

In the device 1002, the app file is dissected (S2-1d, 10027) in the normal app part and the signed RABP. The former is processed by the existing procedures for installing (S2-1e, 10028) the app with the additional restriction that the signature of the profile data is successfully verified as being correct. The latter, RABP P1 may be in the device 1002 and linked (S2-1f, 10029) to the app so that when the app is executed its behavior profile P1 can be found in the device.

When the app executes, the device 1002 may also trace the app as it proceeds and constructs an Observed Application Behavior Profile (OABP) P2. The OABP P2 may be compared (S1-2, S2-2, S3-3; 10016, 10026, 10036) to the RABP P1 and if the comparison reveals significant deviations the app may be stopped or halted and the user is informed and asked for consent to proceed.

Note that this allows for a mechanism where the RABP P1 may be updated by the gained insight through the user consent so the user is not bothered the next time when the same condition occurs at a later instant.

In an alternative mode, the device 1002 could first simulate (S2-1b, 100213) the upcoming behavior, i.e., opening of external connections, and first compare the resulting behavior profile P2 with the reference P1 before committing to actually actions. This avoids that improper behavior only can be detected when it already occurred.

Instead of the only analysis by the distribution point 1001, the distribution point could use a set of trusted devices 1002 that already downloaded and installed the app to improve the correctness of its behavior profile P1. These devices can report (S1-2a, 10014) their results (updated RABPs) P1 and the distribution point 1001 can compare the reports and compile a behavior profile (S1-2c, 10018) or augments a basic profile (S1-2b, 10017) that it already established from a basic screening of the app. In such a way one has a collective learning that improves the quality of the protection the reference profile provides.

The collected information must be securely transmitted from the trusted devices to the distribution point. One solution for that may be SSL/TLS or VPN secured connections.

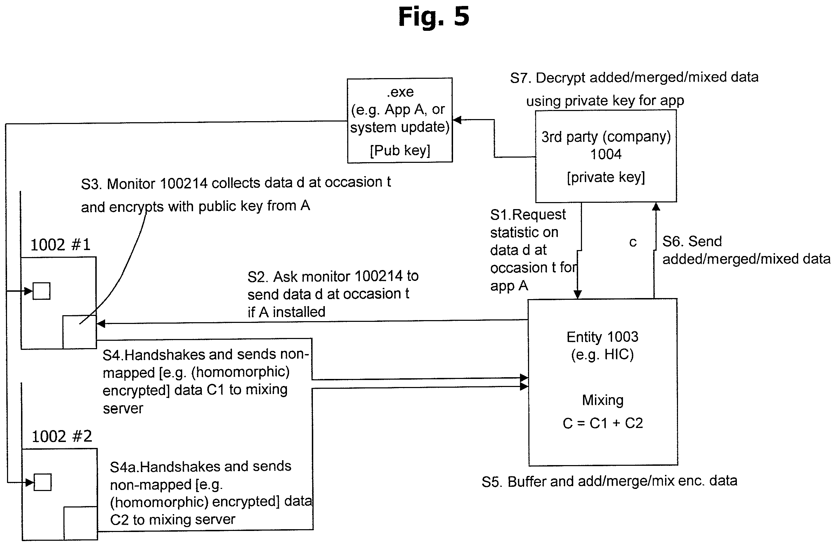

Fig. 5 shows components and method steps comprised in a second exemplary device and method embodiment realized in the form of a distribution point or a file-executing device 1002. It is noted that the file-execution devices 1002 #1, 1002 #2 and the entity 1003 may basically have the same structure as depicted in Fig. 1. That is, e.g., a monitor 100214 comprised in the file-execution device(s) 1002 may also be a function or a separate chip/subassembly implemented in or controlled by the CPU 10021 of each file-execution device 1002. Moreover, all steps S1 to S7 may involve corresponding means implemented in or controlled by the respective CPUs; as a non-exclusive example, the obfuscating/mixing performed by the entity 1003 may involve an obfuscator/mixer (not shown).

When an anomaly has been detected during application or system execution (S3, 100214), the execution host (file-execution device) 1002 is pulled for device information (S2, S4, S4a). In another use-scenario where the execution profiles are compared locally, the host device pushes (S4, S4a) this information to the entity 1003 responsible for collecting it (abbreviated, e.g., as Host Information Collector, HIC).

The HIC 1003 can be deployed as a service in the cloud. Collected information can be merged (S5) by increasing a counter for each specific parameter present in the device-information. This information may have been sent to the HIC 1003 encrypted (S4, S4a) and may use a homomorphic encryption or another scheme that prevents the information from being mapped to (e.g., from being usable to identify) a specific user or device 1002 #1, 1002 #2 in order to preserve privacy. Sending information from a trusted application residing in a trusted execution environment would prevent tampering of device-information. If the goal is to monitor a system, a hypervizor solution can be responsible for sending (S4, S4a) the information.

The behavior above can be generalized so that trigger conditions are defined by application developers (third party) 1004 (S1). In the case when trigger conditions are met, certain device-information is pushed encrypted (S4, S4a) to the HIC 1003.

The HIC 1003 buffers and/or mixes (obfuscates, S5) the data in a way that prevents the developer from mapping received data with a certain user or device 1002 when retrieving (S6) the statistical data from the HIC 1003. In order for the HIC 1003 to merge encrypted data (S5), a homomorphic encryption scheme or other similar schemes can be applied.

More specifically, when a trigger condition is met (S3), possibly based on hypervisor monitoring, a trusted application encrypts the application developer requested device-specific data with a public key (Pub key) supplied by the developer. This encrypted information is then sent to the HIC 1003 (S1) where the third party 1004 can retrieve (S6) the merged data and decrypt it with its private key (S7). This behavior prevents the HIC 1003 from reading sensitive data and mapping users 1002 with the read data, and the third party 1004 is only able to retrieve merged data (S6) and therefore unable to map individual users.

As a non-liming example, the third party 1004 might want to collect location-information from all devices using its app when a certain condition is fulfilled, for example, to retrieve information about where customers live. One solution would be to request permission to retrieve location updates. However, this does not prevent the third party 1004 from mapping individual app users with location data which may be a privacy concern for the user. Another solution to this particular example is to ask the connectivity provider for location-data but this suggested approach is more flexible in terms of monitoring host-device execution and collecting device-information.

The present disclosure provides one or more of the following advantages:

- Alleviating the threat of malware that hides itself from being detected; the quality of applications that the user obtains is improved.
- No or minor changes in the existing way of distribution applications and their so-called eco system.
- Providing a way to identify parameters on a host device that triggers malicious functionality or causes other abnormal behavior.
- Gradually improving the quality of the protection by collective learning.
- Collecting anonymized device-information provides a way to share this information in a flexible way by applying it on different use-scenarios while preserving privacy.

It is believed that the advantages of the technique presented herein will be fully understood from the foregoing description, and it will be apparent that various changes may be made in the form, constructions and arrangement of the exemplary aspects thereof without departing from the scope of the invention or without sacrificing all of its advantageous effects. Because the technique presented herein can be varied in many ways, it will be recognized that the invention should be limited only by the scope of the claims that follow.

**Claims**

1. A method for determining a malign or non-malign behavior of an executable file, **characterized in that** the method is performed in a file-execution device (1002) comprising a real environment, wherein the method comprises the steps of:

    - receiving (S2-1a) from a distribution point (1001) comprising an emulated environment:

        - a first behavior profile (P1) of the executable file, the first behavior profile (P1) comprising a first observable execution trace of the executable file from the emulated environment,
- the executable file, and
- a signature of the first behavior profile;

- installing (S2-1e) at the file-execution device (1002), the executable file, under a prerequisite that the received signature of the first behavior profile is verified as correct;
- linking (S2-1f) the first behavior profile (P1) to the executable file;
- generating (S2-1) in the file-execution device (1002), a second behavior profile (P2) of the executable file, the second behavior profile (P2) comprising a second observable execution trace of the executable file from the real environment of the file-execution device (1002); and
- comparing (S2-2) the first and second observable execution traces so as to determine the malign or non-malign behavior of the executable file, wherein if the comparing step (S2-2) yields deviations between the first and second observable execution traces, the method further comprises:

- ceasing execution (S2-1g) of the executable file,
- querying (S2-1h) a user of the file-execution device (1002) whether the ceased execution is to be resumed, and
- updating (S2-1i) the second behavior profile (P2) based on the result of the query.

2. The method of claim 1, wherein:

- the signature is the result of application of a private key of a private/public key cryptosystem, and
- a public key used for verifying the signature is stored on the file-execution device (1002) or is received as a part of a digital certificate.

3. The method according to claim 1, further comprising, prior to generating the second behavior profile (P2):

- simulating (S2-1b) the result of the generating step.

4. The method according to claim 1, wherein the first behavior profile (P1) is generated (S1-1) in the distribution point (1001).

5. The method according to claim 1, wherein the method further comprises:

- receiving (S1-2a), from each of a plurality of file-execution devices (1002), a separate second behavior profile, and

wherein the comparing step further comprises:

- comparing (S1-2) in the distribution point (1001), the first observable execution trace in the first behavior profile (P1) with the plurality of the second observable execution traces profiles, and

wherein the method further comprises:

- updating (S1-2b) or initially creating (S1-2c) the first behavior profile (P1) based on the comparison.

6. The method according to claim 1, wherein the first behavior profile (P1) and the second behavior profile (P2) are generated based on one of a treemap and a behavior graph.

7. A computer program product comprising program code portions for performing the method according to any one of the preceding claims, the computer program product being adapted to be executed in the file-execution device (1002) comprising the real environment, the computer program product preferably being stored on a computer readable recording medium.

8. A wireless communication device (1002) for determining a malign or non-malign behavior of an executable file, the wireless communication device comprising at least one processor (10011, 10021, 10031) comprising a real environment configured to:

- receive (S2-1a) from a distribution point (1001) comprising an emulated environment:

  - a first behavior profile (P1) of the executable file, the first behavior profile (P1) comprising a first observable execution trace of the executable file from the emulated environment;
  - the executable file, and
  - a signature of the first behavior profile;

- install (S2-1e) at the file-execution device (1002), the executable file, under a prerequisite that the received signature of the first profile is verified as correct;
- link (S2-1f) the first behavior profile (P1) to the executable file;
- generate (S2-1) in the file-execution device (1002) a second behavior profile (P2) of the executable file, the second behavior profile (P2) comprising a second observable execution trace of the executable file from the real environment; and
- compare (S2-2) the first and second observable execution traces so as to determine the malign or non-malign behavior of the executable file, wherein if the comparing step (S2-2) yields deviations between the first and second observable execution traces, the processor (10011, 10021, 10031) is further configured to:

  - cease execution (S2-1g) of the executable file,
  - query (S2-1h) a user of the file-execution device (1002) whether the ceased execution is to be resumed, and
  - update (S2-1i) the second behavior profile (P2) based on the result of the query.

**Patentansprüche**

1. Verfahren zur Bestimmung eines bösartigen oder harmlosen Verhaltens einer ausführbaren Datei, **dadurch gekennzeichnet, dass** das Verfahren in einer Dateiausführungsvorrichtung (1002) durchgeführt wird, die eine echte Umgebung umfasst, wobei das Verfahren die folgenden Schritte umfasst:

  - Empfangen (S2-1a), von einem Verteilungspunkt (1001), der eine emulierte Umgebung umfasst:

    - eines ersten Verhaltensprofils (P1) der ausführbaren Datei, wobei das erste Verhaltensprofil (P1) eine erste beobachtbare Ausführungsspur der ausführbaren Datei von der emulierten Umgebung umfasst,
    - die ausführbare Datei, und
    - eine Signatur des ersten Verhaltensprofils;
  - Installieren (S2-1e) der ausführbaren Datei an der Dateiausführungsvorrichtung (1002) unter einer Voraussetzung, dass die empfangene Signatur des ersten Verhaltensprofils als korrekt verifiziert ist;
  - Verbinden (S2-1f) des ersten Verhaltensprofils (P1) mit der ausführbaren Datei;
  - Generieren (S2-1) eines zweiten Verhaltensprofils (P2) der ausführbaren Datei in der Dateiausführungsvorrichtung (1002), wobei das zweite Verhaltensprofil (P2) eine zweite beobachtbare Ausführungsspur der ausführbaren Datei von der echten Umgebung der Dateiausführungsvorrichtung (1002) umfasst; und
  - Vergleichen (S2-2) der ersten und der zweiten beobachtbaren Ausführungsspur, um das bösartige oder harmlose Verhalten der ausführbaren Datei zu bestimmen, wobei, wenn der Vergleichsschritt (S2-2) Abweichungen zwischen der ersten und der zweiten beobachtbaren Ausführungsspur ergibt, das Verfahren ferner Folgendes umfasst:

    - Beenden der Ausführung (S2-1g) der ausführbaren Datei,
    - Abfragen (S2-1h) eines Benutzers der Dateiausführungsvorrichtung (1002), ob die beendete Ausführung wiederaufzunehmen ist, und
    - Aktualisieren (S2-1i) des zweiten Verhaltensprofils (P2) basierend auf dem Ergebnis der Abfrage.

2. Verfahren nach Anspruch 1, wobei:

  - die Signatur das Ergebnis der Anwendung eines privaten Schlüssels eines Kryptosystems mit privatem/öffentlichem Schlüssel ist, und
  - ein öffentlicher Schlüssel, der zum Verifizieren der Signatur verwendet wird, an der Dateiausführungsvorrichtung (1002) gespeichert wird oder als Teil eines digitalen Zertifikats empfangen wird.

3. Verfahren nach Anspruch 1, ferner umfassend, vor dem Generieren des zweiten Verhaltensprofils (P2):

- Simulieren (S2-1b) des Ergebnisses des Generierschrittes.

4. Verfahren nach Anspruch 1, wobei das erste Verhaltensprofil (P1) in dem Verteilungspunkt (1001) generiert (S1-1) wird.

5. Verfahren nach Anspruch 1, wobei das Verfahren ferner Folgendes umfasst:

   - Empfangen (S1-2a) eines separaten zweiten Verhaltensprofils von jeder aus einer Vielzahl von Dateiausführungsvorrichtungen (1002), und

   wobei der Vergleichsschritt ferner Folgendes umfasst:

   - Vergleichen (S1-2) der ersten beobachtbaren Ausführungsspur in dem ersten Verhaltensprofil (P1) mit der Vielzahl der zweiten beobachtbaren Ausführungsspuren in dem Verteilungspunkt (1001), und

   wobei das Verfahren ferner Folgendes umfasst:

   - Aktualisieren (S1-2b) oder anfängliches Erstellen (S1-2c) des ersten Verhaltensprofils (P1) basierend auf dem Vergleich.

6. Verfahren nach Anspruch 1, wobei das erste Verhaltensprofil (P1) und das zweite Verhaltensprofil (P2) basierend auf einem von einer Baumkarte und einem Verhaltensgraphen generiert werden.

7. Computerprogrammprodukt, umfassend Programmcodeabschnitte zur Durchführung des Verfahrens nach einem der vorhergehenden Ansprüche, wobei das Computerprogrammprodukt ausgelegt ist, um in der Dateiausführungsvorrichtung (1002) ausgeführt zu werden, die die echte Umgebung umfasst, wobei das Computerprogrammprodukt bevorzugt an einem computerlesbaren Aufzeichnungsmedium gespeichert wird.

8. Drahtloskommunikationsvorrichtung (1002) zur Bestimmung eines bösartigen oder harmlosen Verhaltens einer ausführbaren Datei, wobei die Drahtloskommunikationsvorrichtung zumindest einen Prozessor (10011, 10021, 10031) umfasst, der eine echte Umgebung umfasst, der für Folgendes konfiguriert ist:

   - Empfangen (S2-1a), von einem Verteilungspunkt (1001), der eine emulierte Umgebung umfasst:

      - eines ersten Verhaltensprofils (P1) der ausführbaren Datei, wobei das erste Verhaltensprofil (P1) eine erste beobachtbare Ausführungsspur der ausführbaren Datei von der emulierten Umgebung umfasst,
      - die ausführbare Datei, und
      - eine Signatur des ersten Verhaltensprofils;
      - Installieren (S2-1e) der ausführbaren Datei an der Dateiausführungsvorrichtung (1002) unter einer Voraussetzung, dass die empfangene Signatur des ersten Verhaltensprofils als korrekt verifiziert ist;
      - Verbinden (S2-1f) des ersten Verhaltensprofils (P1) mit der ausführbaren Datei;
      - Generieren (S2-1) eines zweiten Verhaltensprofils (P2) der ausführbaren Datei in der Dateiausführungsvorrichtung (1002), wobei das zweite Verhaltensprofil (P2) eine zweite beobachtbare Ausführungsspur der ausführbaren Datei von der echten Umgebung umfasst; und
      - Vergleichen (S2-2) der ersten und der zweiten beobachtbaren Ausführungsspur, um das bösartige oder harmlose Verhalten der ausführbaren Datei zu bestimmen, wobei, wenn der Vergleichsschritt (S2-2) Abweichungen zwischen der ersten und der zweiten beobachtbaren Ausführungsspur ergibt, der Prozessor (10011, 10021, 10031) ferner für Folgendes konfiguriert ist:

         - Beenden der Ausführung (S2-1g) der ausführbaren Datei,
         - Abfragen (S2-1h) eines Benutzers der Dateiausführungsvorrichtung (1002), ob die beendete Ausführung wiederaufzunehmen ist, und
         - Aktualisieren (S2-1i) des zweiten Verhaltensprofils (P2) basierend auf dem Ergebnis der Abfrage.

**Revendications**

1. Procédé de détermination d'un comportement néfaste ou inoffensif d'un fichier exécutable, **caractérisé en ce que** le procédé est exécuté dans un dispositif d'exécution de fichier (1002) comprenant un environnement réel, dans lequel le procédé comprend les étapes :

- de réception (S2-1a), depuis un point de distribution (1001) comprenant un environnement émulé :

- d'un premier profil de comportement (P1) du fichier exécutable, le premier profil de comportement (P1) comprenant une première trace d'exécution observable du fichier exécutable depuis l'environnement émulé,
- du fichier exécutable, et
- d'une signature du premier profil de comportement ;
- d'installation (S2-1e), sur le dispositif d'exécution de fichier (1002), du fichier exécutable, à condition que la signature reçue du premier profil de comportement soit vérifiée comme correcte ;
- de liaison (S2-1f) du premier profil de comportement (P1) au fichier exécutable ;
- de génération (S2-1), dans le dispositif d'exécution de fichier (1002), d'un second profil de comportement (P2) du fichier exécutable, le second profil de comportement (P2) comprenant une seconde trace d'exécution observable du fichier exécutable depuis l'environnement réel du dispositif d'exécution de fichier (1002) ; et
- de comparaison (S2-2) des première et seconde traces d'exécution observables afin de déterminer le comportement néfaste ou inoffensif du fichier exécutable, dans lequel, si l'étape de comparaison (S2-2) génère des écarts entre les première et seconde traces d'exécution observables, le procédé comprend en outre :

- l'interruption de l'exécution (S2-1g) du fichier exécutable,
- le fait de demander (S2-1h) à un utilisateur du dispositif d'exécution de fichier (1002) si l'exécution interrompue doit être reprise, et
- la mise à jour (S2-1i) du second profil de comportement (P2) en fonction du résultat de la demande.

2. Procédé selon la revendication 1, dans lequel :

- la signature est le résultat de l'application d'une clé privée d'un cryptosystème à clé privée/publique, et
- une clé publique utilisée pour vérifier la signature est stockée sur le dispositif d'exécution de fichier (1002) ou est reçue dans le cadre d'un certificat numérique.

3. Procédé selon la revendication 1, comprenant en outre, avant la génération du second profil de comportement (P2) :

- la simulation (S2-1b) du résultat de l'étape de génération.

4. Procédé selon la revendication 1, dans lequel le premier profil de comportement (P1) est généré (S1-1) dans le point de distribution (1001).

5. Procédé selon la revendication 1, dans lequel le procédé comprend en outre :

- la réception (S1-2a), depuis chacun d'une pluralité de dispositifs d'exécution de fichier (1002), d'un second profil de comportement séparé, et

dans lequel l'étape de comparaison comprend en outre :

- la comparaison (S1-2), dans le point de distribution (1001), de la première trace d'exécution observable dans le premier profil de comportement (P1) avec la pluralité des seconds profils de traces d'exécution observables, et

dans lequel le procédé comprend en outre :

- la mise à jour (S1-2b) ou la création initiale (S1-2c) du premier profil de comportement (P1) en fonction de la comparaison.

6. Procédé selon la revendication 1, dans lequel le premier profil de comportement (P1) et le second profil de comportement (P2) sont générés en fonction d'un élément parmi une carte proportionnelle et un graphique de comportement.

7. Produit de programme informatique comprenant des parties de code de programme pour exécuter le procédé selon l'une quelconque des revendications précédentes, le produit de programme informatique étant conçu pour être exécuté dans le dispositif d'exécution de fichier (1002) comprenant l'environnement réel, le produit de programme informatique étant de préférence stocké sur un support d'enregistrement lisible par ordinateur.

8. Dispositif de communication sans fil (1002) de détermination d'un comportement néfaste ou inoffensif d'un fichier exécutable, le dispositif de communication sans fil comprenant au moins un processeur (10011, 10021, 10031) comprenant un environnement réel configuré pour :

   - recevoir (S2-1a), depuis un point de distribution (1001) comprenant un environnement émulé :

      - un premier profil de comportement (P1) du fichier exécutable, le premier profil de comportement (P1) comprenant une première trace d'exécution observable du fichier exécutable depuis l'environnement émulé,
      - le fichier exécutable, et
      - une signature du premier profil de comportement ;
   - installer (S2-1e), sur le dispositif d'exécution de fichier (1002), le fichier exécutable, à condition que la signature reçue du premier profil soit vérifiée comme correcte ;
   - lier (S2-1f) le premier profil de comportement (P1) au fichier exécutable ;
   - générer (S2-1), dans le dispositif d'exécution de fichier (1002), un second profil de comportement (P2) du fichier exécutable, le second profil de comportement (P2) comprenant une seconde trace d'exécution observable du fichier exécutable depuis l'environnement réel ; et
   - comparer (S2-2) les première et seconde traces d'exécution observables afin de déterminer le comportement néfaste ou inoffensif du fichier exécutable, dans lequel, si l'étape de comparaison (S2-2) génère des écarts entre les première et seconde traces d'exécution observables, le processeur (10011, 10021, 10031) est en outre configuré pour :

      - interrompre l'exécution (S2-1g) du fichier exécutable,
      - demander (S2-1h) à un utilisateur du dispositif d'exécution de fichier (1002) si l'exécution interrompue doit être reprise, et
      - mettre à jour (S2-1i) le second profil de comportement (P2) en fonction du résultat de la demande.

**Distribution point 1001**

MEM 10012

CPU; circuitry; SW module 10011

Acquirer 10015

TX/RX 10013/ 10014

Updater 10017
Creator 10018

Comparator 10016

**File-execution dev. 1002**

MEM 10022

CPU; circuitry; SW module 10011

Acquirer 10025

TX/RX 10023/ 10024

Separator 10027

Installer 10028
Linker 10029

Executioner 100210
Query 100211
Updater 100212

Simulator 100213

Comparator 10026

**Entity 1003**

MEM 10032

CPU; circuitry; SW module 10031

Acquirer 10035

TX/RX 10033/ 10034

Comparator 10036

EP 2 873 023 B1

# Fig. 2

**100**

| Distribution point 1001 | File-executing device 1002 | Entity 1003 |
|---|---|---|
| □ or ▧ or SW | □ or ▧ or SW | □ or ▧ or SW |
| Emulated environment | Real environment | |

S1-1: Generating
1st behavior profile of .exe
[1st observable trace from emul. env.]

*S2-1a: RX* ─────── *S3-1a: RX* → S3-1: Acquire
1st behavior profile of .exe
[1st observable trace from emul. env.]

*S2-1b: Simulate gen. of 2nd profile*

*S1-1a: RX*

S2-1: Generating
2nd behavior profile of .exe
[2nd observable trace from real env.]

*S3-2a: RX*

S3-2: Acquire
2nd behavior profile of .exe
[2nd observable trace from real env.]

*S2-1c: RX .exe & sign. [1st profile]*

*S2-1d: Separate .exe & sign.*
*S2-1e: Installing .exe if sign. correct*
*S2-1f: Linking .exe and 1st profile*

*S1-2a: RX*
*Plural 2nd profiles*

*S2-1g: Cease exec of .exe*
*S2-1h: Query user for resumption*
*S2-1i: Update 2nd profile*

S1-2: Compare
1st and 2nd observable *(plural)* traces

*S1-2b: Update 1st profile*
*S1-2c: Initially creating 1st profile*

S2-2: Compare
1st and 2nd observable traces

S3-3: Compare
1st and 2nd observable traces

EP 2 873 023 B1

# Fig. 3

**MEM 10012, 10022, 10032**

**DS [Profile (P1, P2)]**

E | timestamp + syscall nr + argument 1 + ... + argument n

E | *timestamp + syscall nr + Hash (syscall nr + argument 1 + ... + argument n)*

E | *timestamp + syscall nr + Hash (syscall nr + Classify(argument 1) + ... + Classify(argument n))*

# Fig. 4A

operation

section

SEVICE

DEXLOAD

CALL

SMSLEAK

SMSSEND

FILELEAK    NETLEAK    CRYPTENC

FILEREAD    NETREAD    CRYPTDEC

FILEWRITE    NETWRITE    CRYPTKEY

NETOPEN

EP 2 873 023 B1

# Fig. 4B

# Fig. 5

.exe
(e.g. App A, or
system update)

[Pub key]

S7. Decrypt added/merged/mixed data
using private key for app

3rd party (company)
1004

[private key]

S3. Monitor 100214 collects data d at occasion t
and encrypts with public key from A

1002 #1

S1.Request
statistic on
data d at
occasion t for
app A

c

S6. Send
added/merged/mixed data

S2. Ask monitor 100214 to
send data d at occasion t
if A installed

S4.Handshakes and sends non-
mapped [e.g. (homomorphic)
encrypted] data C1 to mixing
server

Entity 1003
(e.g. HIC)

Mixing

C = C1 + C2

1002 #2

S4a.Handshakes and sends
non-mapped [e.g.
(homomorphic) encrypted] data
C2 to mixing server

S5. Buffer and add/merge/mix enc. data

EP 2 873 023 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011145920 A1
- US 2007140479 A1
- US 20090089878 A1